# FASCICULE DE BREVET EUROPEEN

(11) **EP 2 734 741 B1**
(45) Date de publication et mention de la délivrance du brevet: **14.11.2018**
(21) Numéro de dépôt: 12744093.1
(22) Date de dépôt: 13.07.2012
(51) Int. Cl.: F16B 39/10

(54) **DISPOSITIF D'ANTI-ROTATION POUR ECROU DE GRANDE TAILLE**
DREHSICHERUNGSVORRICHTUNG FÜR GROSSE MUTTERN
ANTI-ROTATION DEVICE FOR A LARGE-SIZE NUT

(30) Priorité: 22.07.2011 FR 1156707
(43) Date de publication de la demande: 28.05.2014
(73) Titulaire: Safran Aircraft Engines, 75015 Paris (FR)
(72) Inventeur: GIGNOUX, Hervé, 77000 Vuax Le Penil (FR); JOLY, Philippe, Gérard, Edmond, 77000 Vaux Le Penil (FR); THORY, Romain, Jean-Louis, Robert, 77550 Moissy-cramayel (FR)
(74) Mandataire: Camus, Olivier Jean-Claude
(86) Numéro de dépôt international: PCT/FR2012/051671
(87) Numéro de publication internationale: WO 2013/014359

(56) Documents cités:
- FR-A1- 2 739 904
- GB-A- 878 058
- US-A- 1 431 459
- US-B1- 7 927 052

## Description

### DOMAINE TECHNIQUE DE L'INVENTION

La présente invention concerne un dispositif d'anti-rotation d'un écrou serré sur une partie mâle, par exemple un écrou serré sur un arbre de turbine d'un moteur d'aéronef. Le domaine technique de l'invention est, d'une façon générale, celui des dispositifs d'anti-rotation d'écrous de grand diamètre.

### ARRIERE PLAN TECHNOLOGIQUE DE L'INVENTION

Afin d'empêcher la rotation d'un écrou après serrage sur une partie mâle, un dispositif d'anti-rotation doit être intégré. Certains écrous de petite taille de l'art antérieur disposent d'un auto-frein, mais les auto-freins ne sont pas adaptés aux écrous de grande taille. En effet, les auto-freins ne sont disponibles que sur les écrous de 4 à 15,875 millimètres de diamètre.

Certaines solutions de l'art antérieur proposent donc une fonction anti-rotation par collaboration entre un doigt et des encoches. Par exemple, sur le moteur CFM56 d'aéronef, la fonction anti-rotation d'un écrou serré sur un arbre de turbine est assurée via un tube de ventilation situé à l'intérieur de l'arbre de turbine. Un doigt est en effet installé sur le tube de ventilation, et logé dans des encoches de l'écrou et de l'arbre, empêchant alors l'écrou de se mettre en rotation autour de l'arbre. Le tube de ventilation étant centré en plusieurs endroits, un basculement du doigt est impossible.

Cependant certains moteurs d'aéronef, par exemple le SilverCrest, ne disposent pas de tubes de ventilation à l'intérieur des arbres de turbine, et plus généralement les parties mâles ne disposent pas forcément de pièce installée à l'intérieur de la partie mâle, sur laquelle installer un doigt.

Le document US 1 431 459 A donne un exemple d'un dispositif d'anti-rotation comportant des encoches et des doigts sur une bague.

### DESCRIPTION GENERALE DE L'INVENTION

L'objet de l'invention offre un dispositif d'anti-rotation d'un écrou de grande taille serré sur une partie mâle, ne nécessitant pas qu'une pièce soit préalablement installée à l'intérieur de la partie mâle, et qu'un doigt soit fixé sur ladite pièce.

Selon un premier aspect, l'invention concerne donc essentiellement un dispositif d'anti-rotation d'un écrou en position serrée sur une partie mâle, ladite partie mâle étant creuse au moins au niveau d'une zone périphérique, le dispositif étant caractérisé en ce qu'il comporte :
- une pluralité d'encoches supérieures pratiquées au niveau d'une extrémité de l'écrou, lesdites encoches supérieures s'étendant selon un axe longitudinal de l'écrou,
- une pluralité d'encoches inférieures pratiquées dans la zone périphérique de la partie mâle, lesdites encoches inférieures s'étendant selon un axe longitudinal de la partie mâle, et lesdites encoches inférieures et supérieures se superposant au moins partiellement lorsque l'écrou est en position serrée sur la partie mâle.
- une bague comportant au moins un doigt long logé à la fois dans l'une des encoches inférieures de la partie mâle et dans l'une des encoches supérieures de l'écrou.

Grâce au dispositif selon l'invention, le doigt long de la bague empêche la rotation de l'écrou.

Outre les caractéristiques principales qui viennent d'être mentionnées dans le paragraphe précédent, la virole annulaire selon l'invention peut présenter une ou plusieurs caractéristiques complémentaires parmi les suivantes, considérées individuellement ou selon les combinaisons techniquement possibles :
- la bague comporte en outre au moins deux doigts courts, chaque doigt court étant logé dans l'une des encoches inférieures. Les doigts courts équilibrent la bague et l'empêchent de basculer.
- la bague comporte quatre doigts courts, chaque doigt court étant logé dans une encoche inférieure. Ce nombre permet d'optimiser l'équilibrage de la bague.
- le nombre d'encoches inférieures est premier avec le nombre d'encoches supérieures. Ainsi, le nombre de combinaisons de positions de l'écrou dans lesquelles une encoche supérieure est alignée avec une encoche inférieure, est maximisé, ce qui réduit le sur-couple à appliquer lors de l'alignement d'une encoche inférieure avec une encoche supérieure, et soulage donc la structure.
- les encoches inférieures et les encoches supérieures ont même longueur.

La position de la bague est alors plus stable.
- les encoches inférieures et les encoches supérieures ont même largeur. Le dispositif d'anti-rotation est alors optimisé car il n'existe pas de jeu entre la bague et les encoches.
- les bases des encoches inférieures et les bases des encoches supérieures sont alignées selon l'axe longitudinal lorsque l'écrou est en position serrée. La position de la bague est alors plus stable.
- seules une encoche supérieure et une encoche inférieure sont positionnées pour recevoir le doigt long lorsque que l'écrou est en position serrée.

Selon un deuxième aspect, l'invention concerne un moteur d'aéronef comportant le dispositif d'anti-rotation d'un écrou en position serrée sur une partie mâle selon l'invention.

L'invention et ses différentes applications seront mieux comprises à la lecture de la description qui suit et à l'examen des figures qui l'accompagnent.

### BREVE DESCRIPTION DE LA FIGURE

Les figures ne sont présentées qu'à titre indicatif et nullement limitatif de l'invention.
Les figures montrent :
   - à la figure 1, une représentation schématique d'un dispositif d'anti-rotation d'un écrou serré sur un arbre de turbine d'un moteur d'aéronef, selon un mode de réalisation de l'invention ;
   - à la figure 2, une représentation schématique d'une bague utilisée dans le dispositif de la figure 1 ;
   - à la figure 3, une vue de face du dispositif de la figure 1.

### DESCRIPTION DETAILLEE D'AU MOINS UN MODE DE REALISATION DE L'INVENTION

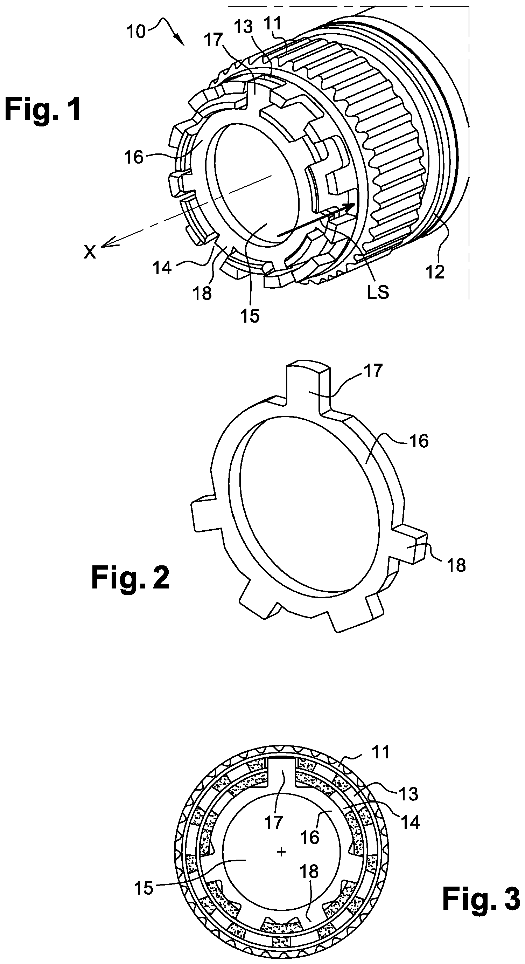

Les figures 1 et 3 sont des représentations schématiques d'un dispositif 10 d'anti-rotation d'un écrou 11 serré sur un arbre 12 de turbine d'un moteur d'aéronef, selon un mode de réalisation de l'invention. Dans cet assemblage arbre 12 / écrou 11, l'écrou 11 constitue la partie femelle, et l'arbre 12 constitue la partie mâle. L'arbre 12 est cylindrique et s'étend selon un axe longitudinal X. L'écrou s'étend également selon un axe longitudinal qui est, en position serré sur l'arbre 12, confondu avec l'axe X. D'autre part, l'arbre 12 est creux au moins au niveau d'une zone périphérique 15.

L'arbre 12 comporte une pluralité d'encoches, qu'on appellera encoches inférieures 14. Les encoches inférieures 14 sont pratiquées dans la zone périphérique 15 de l'arbre 12 et s'étendent selon l'axe longitudinal X sur une longueur Li. L'écrou 11 comporte également une pluralité d'encoches, qu'on appellera encoches supérieures 13. Les encoches supérieures 13 sont pratiquées au niveau d'une extrémité de l'écrou 11, et s'étendent selon l'axe longitudinal de l'écrou 11 sur une longueur Ls. Le nombre d'encoches inférieures 14 n'est à priori pas égal au nombre d'encoches supérieures 13, mais dans le mode de réalisation non limitatif décrit les encoches supérieures 13 et les encoches inférieures 14 ont même longueur Li, Ls, et même largeur.

En position serrée de l'écrou 11 sur l'arbre 12, les encoches inférieures 14 et les encoches supérieures 13 sont superposées, et au moins une encoche supérieure 13 est alignée avec une encoche inférieure 14. Par superposition, on entend recouvrement partiel ou total des encoches inférieures 14 par les encoches supérieures 13, et alignement selon l'axe longitudinal X des bases des encoches inférieures 14 avec les bases des encoches supérieures 13.

Quand l'écrou 11 est en position serrée sur l'arbre 12, une bague 16 est installée à l'intérieur de l'arbre 12. Le diamètre de la bague 16 est tel que la bague 16 épouse la forme intérieure de la zone périphérique 15 de l'arbre 12. La bague 16 comporte un doigt long 17 logé l'encoche inférieure 14 et l'encoche supérieures 13 alignées. Le doigt long 17 empêche alors la rotation de l'écrou 11 sur l'arbre 12.

Avantageusement, le nombre d'encoches inférieures 14 est premier avec le nombre d'encoches supérieures 13. Ainsi, le nombre de combinaisons de positions de l'écrou 11 dans lesquelles une encoche supérieure 13 est alignée avec une encoche inférieure 14, est maximisé, ce qui réduit le sur-couple à appliquer lors de l'alignement d'une encoche inférieure 14 avec une encoche supérieure 13, et soulage donc la structure.

Dans le mode de réalisation non limitatif décrit, la bague 16 comporte en outre quatre doigts courts 18 logés dans quatre encoches inférieures 14 de l'arbre 12. Les doigts courts 18 ont la longueur nécessaire et suffisante pour ne se loger que dans les encoches inférieures 14. Ces doigts courts 18 permettent d'une part d'empêcher que la bague ne bascule dans l'arbre 12. On note alors que deux doigts courts 18 suffisent à assurer la fonction anti-basculement. D'autre part, une détermination astucieuse, telle que celle représentée figure 2, d'un nombre et d'une position des doigts courts 18 sur la bague 16, permet d'équilibrer la bague 16, pour qu'aucune sur-masse ne soit à ajouter pour corriger un éventuel balourd. Le nombre et la position des doigts courts 18 à choisir dépendent de la géométrie de l'ensemble, et en particulier de la longueur du doigt long 17.

L'invention est décrite dans ce qui précède à titre d'exemple. Il est entendu que l'homme du métier est à même de réaliser différentes variantes du dispositif selon l'invention, en particulier concernant la taille et le nombre des encoches, et le nombre et la disposition des doigts, sans pour autant sortir du cadre des revendications.

## Revendications

1. Dispositif (10) d'anti-rotation d'un écrou (11) en position serrée sur une partie mâle (12), le dispositif (10) comportant l'écrou (11) et la partie mâle (12), ladite partie mâle étant creuse au moins au niveau d'une zone périphérique, le dispositif (10) comportant :
- une pluralité d'encoches supérieures (13) pratiquées au niveau d'une extrémité de l'écrou (11), lesdites encoches supérieures (13) s'étendant selon un axe longitudinal de l'écrou (11),
- une pluralité d'encoches inférieures (14) pratiquées dans la zone périphérique (15) de la partie mâle (12), lesdites encoches inférieures (14) s'étendant selon un axe longitudinal (X) de la partie mâle (12), et lesdites encoches inférieures (14) et supérieures (13) se superposant au moins partiellement lorsque l'écrou (11) est en position serrée sur la partie mâle (12),
une bague (16) comportant au moins un doigt long (17) logé à la fois dans l'une des encoches inférieures (14) de la partie mâle (12) et dans l'une des encoches supérieures (13) de l'écrou (11).

2. Dispositif (10) selon la revendication précédente, **caractérisé en ce que** la bague (16) comporte en outre au moins deux doigts courts (18), chaque doigt court (18) étant logé dans une encoche inférieure (14).

3. Dispositif (10) selon l'une des revendications précédentes, **caractérisé en ce que** la bague (16) comporte quatre doigts courts (18), chaque doigt court (18) étant logé dans une encoche inférieure (14).

4. Dispositif (10) selon l'une des revendications précédentes, **caractérisé en ce que** le nombre d'encoches inférieures (14) est premier avec le nombre d'encoches supérieures (13).

5. Dispositif (10) selon l'une des revendications précédentes, **caractérisé en ce que** les encoches inférieures (14) et les encoches supérieures (13) ont même longueur.

6. Dispositif (10) selon l'une des revendications précédentes, **caractérisé en ce que** les encoches inférieures (14) et les encoches supérieures (13) ont même largeur.

7. Dispositif (10) selon l'une des revendications précédentes, **caractérisé en ce que** les bases des encoches inférieures (14) et les bases des encoches supérieures (13) sont alignées selon l'axe longitudinal (X) lorsque l'écrou (11) est en position serrée.

8. Dispositif (10) selon l'une des revendications précédentes, **caractérisé en ce que** seules une encoche supérieure (13) et une encoche inférieure (14) sont positionnées pour recevoir le moyen de blocage (17) lorsque que l'écrou (11) est en position serrée.

9. Moteur d'aéronef comportant un dispositif (10) d'anti-rotation d'un écrou (11) en position serrée sur une partie mâle (12) selon l'une des revendications précédentes.

## Patentansprüche

1. Antirotationsvorrichtung (10) einer Mutter (11) in festgezogener Position auf einem männlichen Teil (12), wobei die Vorrichtung (10) die Mutter (11) und den männlichen Teil (12) umfasst, wobei der genannte männliche Teil wenigstens an einem umlaufenden Bereich hohl ist, wobei die Vorrichtung (10) umfasst:
- eine Vielzahl von oberen Kerben (13), die an einem Ende der Mutter (11) praktiziert sind, wobei die genannten oberen Kerben (13) sich gemäß einer Längsachse der Mutter (11) erstrecken;
- eine Vielzahl von unteren Kerben (14), die in dem umlaufenden Bereich (15) des männlichen Teils (12) praktiziert sind, wobei die genannten unteren Kerben (14) sich gemäß einer Längsachse (X) des männlichen Teils (12) erstrecken und die genannten unteren (14) und oberen (13) Kerben sich wenigstens teilweise überlagern, wenn die Mutter (11) in festgezogener Position auf dem männlichen Teil (12) ist;
einen Ring (16), umfassend wenigstens einen langen Finger (17), der sowohl in einer der unteren Kerben (14) des männlichen Teils (12) und in einer der oberen Kerben (13) der Mutter (11) untergebracht ist.

2. Vorrichtung (10) gemäß dem voranstehenden Anspruch, **dadurch gekennzeichnet, dass** der Ring (16) darüber hinaus wenigstens zwei kurze Finger (18) umfasst, wobei jeder kurze Finger (18) in einer unteren Kerbe (14) untergebracht ist.

3. Vorrichtung (10) gemäß einem der voranstehenden Ansprüche, **dadurch gekennzeichnet, dass** der Ring (16) vier kurze Finger (18) umfasst, wobei jeder kurze Finger (18) in einer unteren Kerbe (14) untergebracht ist.

4. Vorrichtung (10) gemäß irgendeinem der voranstehenden Ansprüche, **dadurch gekennzeichnet, dass** die Anzahl von unteren Kerben (14) teilerfremd mit der Anzahl der oberen Kerben (13) ist.

5. Vorrichtung (10) gemäß einem der voranstehenden Ansprüche, **dadurch gekennzeichnet, dass** die unteren Kerben (14) und die oberen Kerben (13) dieselbe Länge haben.

6. Vorrichtung (10) gemäß einem der voranstehenden Ansprüche, **dadurch gekennzeichnet, dass** die unteren Kerben (14) und die oberen Kerben (13) dieselbe Breite haben.

7. Vorrichtung (10) gemäß einem der voranstehenden Ansprüche, **dadurch gekennzeichnet, dass** die Basen der unteren Kerben (14) und die Basen der oberen Kerben (13) gemäß der Längsachse (X) gefluchtet sind, wenn die Mutter (11) in festgezogener Position ist.

8. Vorrichtung (10) gemäß einem der voranstehenden Ansprüche, **dadurch gekennzeichnet, dass** nur eine obere Kerbe (13) und eine untere Kerbe (14) positioniert sind, um das Feststellmittel (17) aufzunehmen, wenn die Mutter (11) in festgezogener Position ist.

9. Luftfahrzeugmotor, umfassend eine Anti-Rotationsvorrichtung (10) einer Mutter (11) in festgezogener Position auf einem männlichen Teil (12) gemäß einem der voranstehenden Ansprüche.

## Claims

1. Anti-rotation device (10) for a nut (11) in tightened position on a male part (12), said device (10) comprising the nut (11) and the male part (12), said male part (12)being hollow at least at the peripheral zone (15), the device comprising:
• a plurality of upper notches (13) provided on one end of the nut (11), said upper notches (13) extending along a longitudinal axis of the nut (11),
• a plurality of lower notches (14) provided in one peripheral zone (15) of the male part (12), said lower notches (14) extending along a longitudinal axis (X) of the male part (12), and said lower (14) and upper (13) notches at least partially overlapping when the nut (11) is in tightened position on the male part (12),
• a ring (16) comprising at least a long finger (17) accommodated both in one of the lower notches (14) of the male part (12) and in one of the upper notches (13) of the nut (11).

2. Device (10) according to the preceding claim, **characterised in that** the ring (16) further comprises at least two short fingers (18), each finger court (18) being accommodated in a lower notch (14).

3. Device (10) according to one of the preceding claims, **characterised in that** the ring (16) comprises four short fingers (18), each short finger (18) being accommodated in a lower notch (14).

4. Device (10) according to one of the preceding claims, **characterised in that** the number of lower notches (14) is prime with the number of upper notches (13).

5. Device (10) according to one of the preceding claims, **characterised in that** the lower notches (14) and the upper notches (13) have same length.

6. Device (10) according to one of the preceding claims, **characterised in that** the lower notches (14) and the upper notches (13) have same width.

7. Device (10) according to one of the preceding claims, **characterised in that** the bases of the lower notches (14) and the bases of the upper notches (13) are aligned along the longitudinal axis (X) when the nut (11) is in tightened position.

8. Device (10) according to one of the preceding claims, **characterised in that** only an upper notch (13) and a lower notch (14) are positioned to receive the locking means (17) when the nut (11) is in tightened position.

9. Aircraft engine comprising an anti-rotation device (10) for a nut (11) in tightened position on a male part (12) according to one of the preceding claims.
